# EUROPÄISCHE PATENTSCHRIFT

(11) **EP 1 106 400 B1**
(45) Veröffentlichungstag und Bekanntmachung des Hinweises auf die Patenterteilung: **27.07.2005**
(21) Anmeldenummer: 00124705.5
(22) Anmeldetag: 11.11.2000
(51) Int. Cl.: B60G 17/015

(54) **Niveauregelsystem in Kraftfahrzeugen**
Height control system for motor vehicles
Système de régulation du niveau pour véhicules automobiles

(30) Priorität: 10.12.1999 DE 19959658
(43) Veröffentlichungstag der Anmeldung: 13.06.2001
(73) Patentinhaber: Bayerische Motoren Werke Aktiengesellschaft, 80809 München (DE)
(72) Erfinder: Reisinger, Stefan, 82299 Türkenfeld (DE); Brack, Jürgen, 87448 Waltenhofen (DE)

(56) Entgegenhaltungen:
- EP-A- 0 217 356
- EP-A- 0 315 458
- DE-A- 4 003 781
- DE-A- 19 640 149
- US-A- 4 349 077
- US-A- 5 450 322
- PATENT ABSTRACTS OF JAPAN vol. 009, no. 158 (M-393), 3. Juli 1985 (1985-07-03) & JP 60 033115 A (MITSUBISHI JIDOSHA KOGYO KK;OTHERS: 01), 20. Februar 1985 (1985-02-20)

## Beschreibung

Die Erfindung bezieht sich auf ein Niveauregelsystem in Kraftfahrzeugen nach dem Oberbegriff des einzigen Patentanspruchs.

Ein derartiges Niveauregelsystem ist beispielsweise aus der DE 196 40 149 A1 bekannt. Dieses bekannte Niveauregelsystem weist Radaufhängungseinrichtungen in Form von mit Druckluft beaufschlagbaren Luftfedereinrichtungen auf. Die Höhenstandssensoren messen hierbei gleichwirkend mit der Messung der Ist-Höhenstände zwischen einem Fahrzeugrad und dem Fahrzeugaufbau die Ist-Abstände zwischen den Fahrzeugachsen und dem Fahrzeugaufbau. Wenn eine vorgegebene Abweichung zwischen Soll- und Ist-Höhenstand vorliegt, wird bei diesem bekannten Niveauregelsystem der Abschaltzeitpunkt der Verstellung einer Radaufhängungseinrichtung in Abhängigkeit vom Nachlauf-Verhalten des Fahrzeugaufbaus bestimmt. Hierdurch soll ein Überschwingverhalten verhindert werden. Die Gefahr eines zu frühen Abschaltens der Verstellung wird dabei nicht berücksichtigt.

Bei anderen, auch während der Fahrt aktiven Niveauregelsystemen wird bei Vorliegen einer Abweichung zwischen Soll- und Ist-Höhenstand die Nieveauregelung solange vorgenommen, bis der Höhenstandssensor erstmalig den Wert des Soll-Höhenstandes bzw. Sollniveaus sensiert. Um ein Erreichen des Sollniveaus bei einer Niveauregelung mittels Höhenstandssensoren möglichst verzögerungsfrei zu erkennen, ist eine relativ schnelle Filterung der Sensorsignale notwendig. Hierdurch werden jedoch auch Straßenanregungen nahezu ungefiltert sensiert. Niveauregelungen können dadurch vor dem tatsächlichen Erreichen des Sollniveaus als beendet erkannt werden, wenn durch Ein- bzw. Ausfedern das Sollniveau für kurze Zeit vom Höhenstandssensor erfaßt wird. Ein derartiges System ist beispielsweise aus der DE-A-4003781 bekannt.

Es ist Aufgabe der Erfindung, ein Niveauregelsystem eingangs genannter Art derart zu verbessern, daß die Gefahr einer zu frühen Abschaltung der Niveauregelung verhindert wird.

Diese Aufgabe wird durch die Merkmale des einzigen Patentanspruchs gelöst.

Das erfindungsgemäße Niveauregelsystem in Kraftfahrzeugen weist eine verstellbare Radaufhängungseinrichtung zwischen einem Fahrzeugrad und dem Fahrzeugaufbau, einen Höhenstandssensor zur Erfassung des Ist-Höhenstandes zwischen einem Fahrzeugrad und dem Fahrzeugaufbau und ein elektronisches Steuergerät auf. Eine Radaufhängungseinrichtung und ein Höhenstandssensor können beispielsweise für jedes Fahrzeugrad oder nur für die Fahrzeugräder einer Achse vorgesehen sein. Das Steuergerät gibt einen Soll-Höhenstand vor und veranlaßt die Verstellung der Radaufhängungseinrichtung bis zum Erreichen des Soll-Höhenstandes, solange eine Abweichung zwischen Soll- und Ist-Höhenstand vorliegt. Grundsätzlich soll keine Abweichung zwischen Soll- und Ist-Höhenstand vorliegen, jedoch wird üblicherweise ein Toleranzband vorgegeben, um zu häufiges Regeln zu vermeiden. Das elektronische Steuergerät beginnt demnach bei Vorliegen einer Abweichung zwischen Soll- und Ist-Höhenstand, die vorzugsweise größer als eine vorgegebene noch zulässige Abweichung ist, die Radaufhängungseinrichtung für eine vorgegebene Mindeststeuerzeit unabhängig vom Verlauf des Ist-Höhenstandes zu verstellen. Nach Ablauf der Mindeststeuerzeit schaltet das Steuergerät die Verstellung erst ab, wenn der erfaßte Ist-Höhenstand erstmals den Wert des Soll-Höhenstandes erreicht oder bereits überschritten hat.

Vorzugsweise wird die Mindeststeuerzeit durch empirisch ermittelte, im Steuergerät abgespeicherte Erfahrungswerte der Verstellgeschwindigkeit für die jeweils verwendete Radaufhängungs- und Verstelleinrichtung abhängig von der auszugleichenden Abweichung vorgegeben.

Während der Mindeststeuerzeit kann also die Niveauregelung nicht aufgrund eines Signals der Höhenstandssensoren als beendet erkannt werden. Erst nach Ablauf dieser vorgegebenen Mindeststeuerzeit werden wieder die vorzugsweise schnell gefilterten Höhenstandssensorsignale zur Erkennung des erreichten Sollniveaus herangezogen. So führt ein Ein- bzw. Ausfedern, bei dem das Sollniveau kurzfristig erreicht wird, während der Mindeststeuerzeit nicht zum vorzeitigen Beenden der Niveauregelung. Aus der Mindeststeuerzeit resultiert ein garantierter Mindestverstellweg, der zur Erhöhung der Regelgüte, insbesondere bei starken Straßenanregungen, z. B. bei einer Schlechtwegstrecke oder bei welliger Fahrbahnoberfläche, beiträgt. Hieraus resultiert wiederum eine Reduzierung der Regelhäufigkeit. Weiterhin wird bei einem aus Sicherheitsgründen erforderlichen Absenken oder Anheben des Fahrzeugniveaus dem Fahrer kein Zustand signalisiert, der noch nicht erreicht ist.

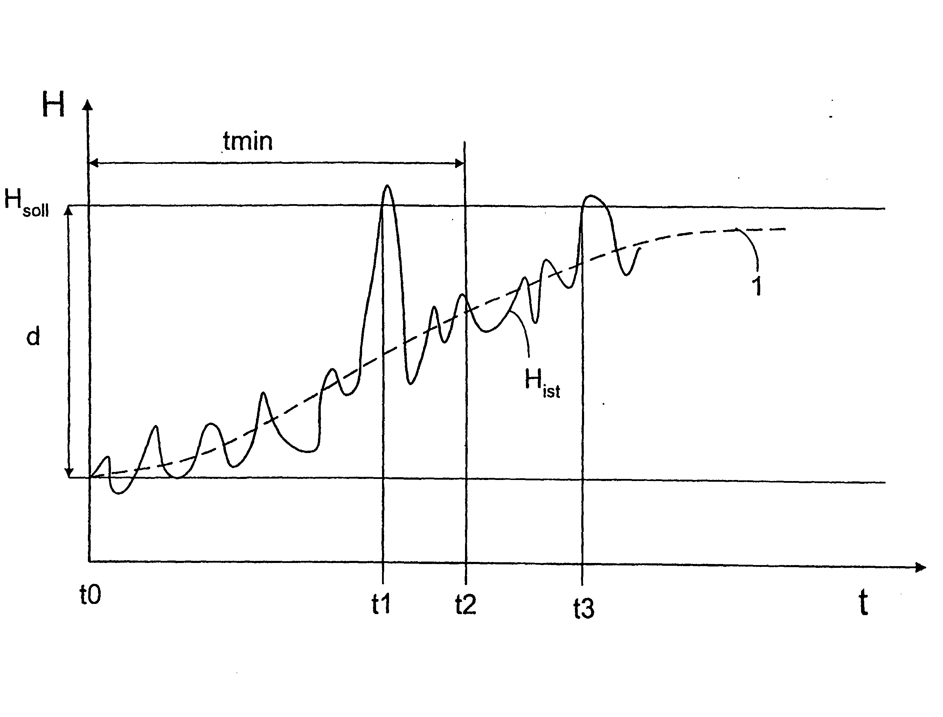

In der Zeichnung ist ein Ausführungsbeispiel der Erfindung dargestellt. Sie zeigt vereinfacht einen Zeitabschnitt eines Regelablaufs an einem Fahrzeugrad mit dem erfindungsgemäßen Niveauregelsystem.

Auf der Abszisse ist die Zeit t und auf der Ordinate der Höhenstand H aufgetragen. In dem Diagramm ist der Verlauf des Ist-Höhenstandes Hᵢₛₜ über der Zeit t dargestellt. Der gestrichelte Verlauf 1 zeigt zum Vergleich den gemittelten Ist-Höhenstandsverlauf.

Zum Zeitpunkt t0 liegt eine Abweichung d zwischen einem vom (hier nicht dargestellten) Steuergerät vorgegebenen Soll-Höhenstand Hₛₒₗₗ und dem Ist-Höhenstand Hᵢₛₜ vor. Die Niveauregelung beginnt damit, bis zum Zeitpunkt t2 für die vorgegebene Mindeststeuerzeit tmin eine Verstellung der hier nicht dargestellten Radaufhängungseinrichtung in Form einer bloßen Zeitsteuerung vorzunehmen. Der Verlauf des Ist-Höhenstandes Hᵢₛₜ wird bis zum Zeitpunkt t2 ignoriert. Zum Zeitpunkt t1 tritt innerhalb der Mindeststeuerzeit tmin beispielsweise eine Fahrbahnanregung auf, die dazu führt, daß der Höhenstandssensor das Erreichen des Soll-Höhenstandes Hₛₒₗₗ anzeigt. Bei einem Niveauregelsystem nach dem Stand der Technik wäre demnach die Niveauregelung zum Zeitpunkt t1 frühzeitig beendet worden. Nach dem erfindungsgemäßen Ausführungsbeispiel wird dieser "Überschwinger" jedoch ignoriert. Nach dem Ablauf der Mindeststeuerzeit tmin wird der Verlauf des Ist-Höhenstandes Hᵢₛₜ vom Steuergerät wieder ausgewertet. Zum Zeitpunkt t3 erreicht der Ist- Höhenstand Hᵢₛₜ erstmals nach Ablauf der Mindeststeuerzeit tmin den Wert des Soll-Höhenstandes Hₛₒₗₗ. Nach dem erfindungsgemäßen Niveauregelsystem wird also zum Zeitpunkt t3 die Niveauregelung abgebrochen bzw. die Verstellung der Radaufhängungseinrichtung abgeschaltet. Selbst wenn der "Überschwinger " zum Zeitpunkt t3 aufgrund einer Straßenunebenheit auftreten würde, wäre eine zumindest nahezu ausreichende Niveauregelung sichergestellt.

## Patentansprüche

1. Niveauregelsystem in Kraftfahrzeugen mit einer verstellbaren Radaufhängungseinrichtung zwischen einem Fahrzeugrad und dem Fahrzeugaufbau, mit einem Höhenstandssensor zur Erfassung des Ist-Höhenstandes zwischen einem Fahrzeugrad und dem Fahrzeugaufbau und mit einem elektronischen Steuergerät, das einen Soll-Höhenstand vorgibt und die Radaufhängungseinrichtung bis zum Erreichen des Soll-Höhenstandes verstellt, wenn eine Abweichung zwischen Soll- und Ist-Höhenstand vorliegt, **dadurch gekennzeichnet, daß** der Ist-Höhenstand mittels schnell gefilterter Höhenstandssensorsignate erfasst wird, dass das elektronische Steuergerät bei Vorliegen einer Abweichung (d) zwischen Soll- Höhenstand (Hₛₒₗₗ) und Ist-Höhenstand (Hᵢₛₜ) die Radaufhängungseinrichtung für eine Mindeststeuerzeit (tmin) unabhängig vom Verlauf des Ist-Höhenstandes (Hᵢₛₜ) verstellt und nach Ablauf der Mindeststeuerzeit (tmin) die Verstellung zu einem Zeitpunkt (t3) abschaltet, zu dem der erfaßte Ist-Höhenstand (Hᵢₛₜ) erstmals den Wert des Soll-Höhenstandes (Hₛₒₗₗ) erreicht hat, und daß die Mindeststeuerzeit (tmin) durch empirisch ermittelte, im Steuergerät abgespeicherte Erfahrungswerte der Verstellgeschwindigkeit für die jeweils verwendete Radaufhängungs- und Verstelleinrichtung abhängig von der auszugleichenden Abweichung (d) vorgegeben wird.

## Claims

1. A level control system in motor vehicles with an adjustable wheel suspension device between a vehicle wheel and the vehicle body, comprising a height sensor for detecting the actual height between a vehicle wheel and the vehicle body and an electronic control apparatus which specifies a desired height and adjusts the wheel suspension device until the desired height is reached when there is a deviation between the desired and actual height, **characterised in that** the actual height is detected by means of rapidly filtered height sensor signals, **in that** the electronic control apparatus adjusts the wheel suspension device for a minimum control time (tmin) regardless of the course of the actual height (H_{actual}) when there is a deviation (d) between the desired height (H_{desired}) and the actual height (H_{actual}) and after expiry of the minimum control time (tmin) switches off the adjustment at an instant (t3), at which the detected actual height (H_{actual}) has for the first time reached the value of the desired height (H_{desired}), and **in that** the minimum control time (tmin) is specified by empirically determined empirical values of the adjustment speed stored in the control apparatus for the respective wheel suspension and adjustment device used depending on the deviation (d) to be compensated.

## Revendications

1. Système de régulation du niveau dans des véhicules automobiles comportant
- une installation de suspension réglable entre une roue et la carrosserie,
- un détecteur de hauteur pour détecter la hauteur réelle entre une roue et la carrosserie, et
- un appareil de commande électronique qui prédéfinit une hauteur prescrite et qui règle l'installation de suspension jusqu'à ce que la hauteur prescrite soit atteinte lorsqu'il y a une différence entre la hauteur prescrite et la hauteur réelle,
**caractérisé en ce que**
la hauteur réelle est détectée à l'aide de signaux rapidement filtrés du détecteur de hauteur,
s'il y a une différence (d) entre la hauteur prescrite (Hₛₒₗₗ) et la hauteur réelle (Hᵢₛₜ), l'appareil de commande électronique règle l'installation de suspension pour une durée minimale de commande (tmin) indépendamment du tracé de la hauteur réelle (Hᵢₛₜ) et, après que la durée minimale de commande (tmin) s'est écoulée, il arrête le réglage à un instant (t3) auquel la hauteur réelle (Hᵢₛₜ) détectée atteint pour la première fois la valeur de hauteur prescrite (Hₛₒₗₗ) et
la durée minimale de commande (tmin) est prédéfinie en fonction de la différence (d) à compenser par des valeurs empiriques de la vitesse de réglage déterminées par l'expérience et mémorisées dans l'appareil de commande pour l'installation de suspension ou l'installation de réglage respectivement utilisées.
